# EUROPEAN PATENT APPLICATION

(11) **EP 4 310 449 A1**
(43) Date of publication of application: **24.01.2024**
(21) Application number: 23183070.4
(22) Date of filing: 03.07.2023
(51) Int. Cl.: G01C 15/00

(54) **LASER SCANNING CONTROL DEVICE, LASER SCANNING APPARATUS, LASER SCANNING CONTROL METHOD, AND PROGRAM**

(30) Priority: 14.07.2022 JP 2022112959
(71) Applicant: TOPCON CORPORATION, Tokyo 174-8580 (JP)
(72) Inventor: SUGIMOTO, Hiroaki, Tokyo, 174-8580 (JP)
(74) Representative: Eisenführ Speiser

(57) **Abstract**

A technique for solving problems related to intense light that is reflected back from a reflector target in laser scanning, is provided. A processing device controls laser scanning that is performed by a laser scanning apparatus having a light reception unit. The processing device includes a laser scanning apparatus controller, a saturation determination unit, and a variable optical attenuator controller. The laser scanning apparatus controller makes the laser scanning apparatus execute first laser scanning and second laser scanning. The saturation determination unit determines a state of saturation of the light reception unit, with respect to laser-scanned point clouds obtained in the first laser scanning. The variable optical attenuator controller adjusts an intensity of light to be received by the light reception unit in the second laser scanning, based on a result of determination.

## Description

### BACKGROUND OF THE INVENTION

### Technical Field

The present invention relates to techniques for laser scanning.

### Background Art

Laser scanning is employed as a surveying means at, for example, construction sites. In this technique, laser scanning is performed in a state in which a reflection prism is set up as a target.

Under these conditions, light that is reflected back from the reflection prism may have a high intensity, causing saturation of a light receiving element of a laser scanning apparatus. In consideration of this, light reduction filters are used in positioning a reflecting prism. Details of this technique are disclosed in, for example, Japanese Patent No. 2926521.

### SUMMARY OF THE INVENTION

Positioning a reflection prism using such light reduction filters involves an operation to adjust light to an appropriate lower state. This is because excessive light reduction can result in detection of low-intensity distance measuring light that provides poor distance measurement accuracy. On the other hand, insufficient light reduction can result in detection of high-intensity distance measuring light that saturates a light reception unit, resulting in poor distance measurement accuracy. Surrounding environments, such as rain, fog, and dust also affect the degree of intensity of distance measuring light appropriate for a reflection prism, and such factors should also be considered.

At a site to be surveyed, in order to detect distance measuring light at an appropriate detection level, light reduction filters may be finely adjusted or be swapped in small increments, by experimentally performing positioning on a reflection prism in advance. However, this method increases operation steps and is not practical. Currently, a light reduction filter that is determined as being approximately appropriate is used, although accuracy of positioning a reflection prism is not very high.

In view of these circumstances, an object of the present invention is to provide a technique for solving problems in laser scanning related to intense light that is reflected back from a reflection prism.

The present invention provides a laser scanning control device for controlling laser scanning that is performed by a laser scanning apparatus having a light reception unit. The laser scanning control device includes a processor or circuitry configured to make the laser scanning apparatus execute first laser scanning and second laser scanning. The first laser scanning is performed under conditions in which distance measurement accuracy is reduced by light reflected back from a reflection prism. The second laser scanning is performed under conditions in which distance measurement accuracy is not reduced by light reflected back from the reflection prism. The processor or circuitry is further configured to determine a state of saturation of the light reception unit, with respect to a laser-scanned point cloud obtained in the first laser scanning, and to adjust an intensity of light to be received by the light reception unit in the second laser scanning, based on a result of determining the state of saturation.

In one aspect of the present invention, the state of saturation may be determined based on an output waveform that is output from the light reception unit. In one aspect of the present invention, the state of saturation may be determined based on a length on a time axis of a maximum value part of the output waveform output from the light reception unit. In one aspect of the present invention, a relationship between the length on the time axis of the maximum value part of the output waveform and a degree of the adjustment may be obtained in advance.

In one aspect of the present invention, in a case in which the length on the time axis of the maximum value part of the output waveform is relatively long, the intensity of light to be received by the light reception unit may be relatively greatly attenuated. In one aspect of the present invention, a relationship between a state in which distance measurement accuracy is not reduced and the length on the time axis of the maximum value part of the output waveform may be preliminarily known, and the intensity of light to be received by the light reception unit may be adjusted in the second laser scanning, based on this relationship.

The present invention also provides a laser scanning apparatus including a light reception unit and a processor or circuity. The processor or circuitry is configured to execute first laser scanning and second laser scanning. The first laser scanning is performed under conditions in which distance measurement accuracy is reduced by light reflected back from a reflection prism. The second laser scanning is performed under conditions in which distance measurement accuracy is not reduced by light reflected back from the reflection prism. The processor or circuitry is further configured to determine a state of saturation of the light reception unit, with respect to a laser-scanned point cloud obtained in the first laser scanning, and to adjust an intensity of light to be received by the light reception unit in the second laser scanning, based on a result of determining the state of saturation.

The present invention also provides a laser scanning control method for controlling laser scanning that is performed by a laser scanning apparatus having a light reception unit. The method includes making the laser scanning apparatus execute first laser scanning and second laser scanning. The first laser scanning is performed under conditions in which distance measurement accuracy is reduced by light reflected back from a reflection prism. The second laser scanning is performed under conditions in which distance measurement accuracy is not reduced by light reflected back from the reflection prism. The method also includes determining a state of saturation of the light reception unit, with respect to a laser-scanned point cloud obtained in the first laser scanning. The method also includes adjusting an intensity of light to be received by the light reception unit in the second laser scanning, based on a result of determining the state of saturation.

The present invention also provides a non-transitory computer recording medium storing computer executable instructions for controlling laser scanning that is performed by a laser scanning apparatus having a light reception unit. The computer executable instructions are made to, when read and executed by a computer processor, cause the computer processor to make the laser scanning apparatus execute first laser scanning and second laser scanning. The first laser scanning is performed under conditions in which distance measurement accuracy is reduced by light reflected back from a reflection prism. The second laser scanning is performed under conditions in which distance measurement accuracy is not reduced by light reflected back from the reflection prism. The computer executable instructions also cause the computer processor to determine a state of saturation of the light reception unit, with respect to a laser-scanned point cloud obtained in the first laser scanning, and to adjust an intensity of light to be received by the light reception unit in the second laser scanning, based on a result of determining the state of saturation.

The present invention enables solving problems related to intense light that is reflected back from a reflection prism, in laser scanning.

### BRIEF DESCRIPTION OF DRAWINGS

Fig. 1 shows a situation of laser scanning.
Fig. 2 shows an external appearance of a laser scanning apparatus.
Fig. 3 shows a block diagram of each of the laser scanning apparatus and a processing device.
Fig. 4 is a block diagram of an optical system.
Fig. 5 is a flowchart showing an example of a processing procedure.
Fig. 6 is a block diagram of another embodiment of the optical system.
Fig. 7 is a block diagram of yet another embodiment of the optical system.
Fig. 8 is a graph showing relationships between a distance and output of a light reception unit in laser scanning.
Fig. 9 is a graph showing relationships between a distance and output of the light reception unit in laser scanning.
Fig. 10 is a conceptual drawing showing relationships between a distance and output of the light reception unit in laser scanning.
Fig. 11 is an output waveform diagram of a light receiving element.

### PREFERRED EMBODIMENTS OF THE INVENTION

### 1. First Embodiment

### Overview

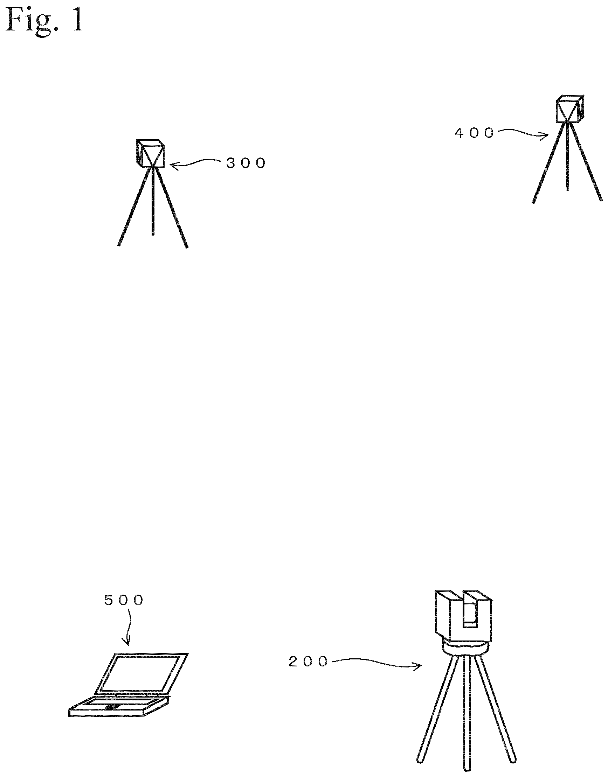

Fig. 1 shows a state in which a laser scanning apparatus 200 and reflection prisms 300 and 400 to be used as targets are set up at a site at which point cloud data is to be obtained.

In addition, Fig. 1 also shows a processing device 500 that processes data obtained by laser scanning as well as controls the laser scanning apparatus 200. The processing device 500 is a computer, and an example of using a personal computer (PC) is illustrated herein.

The reflection prisms 300 and 400 are set up at points at which positions in an absolute coordinate system are already known. The absolute coordinate system is a coordinate system that is used in a map and in a global navigation satellite system (GNSS). A local coordinate system can also be used as the coordinate system.

Although an illustration of a scanning target other than the reflection prisms is omitted in Fig. 1, a target of laser scanning (e.g., terrain or a building) is present in addition to the reflection prisms, in actual cases.

The reflection prisms 300 and 400 reflect incident light in a direction inverted by 180 degrees. Commercially available surveying reflectors are used as the reflection prisms 300 and 400. Instead of a reflection prism, another reflector such as a retroreflector can be used.

The laser scanning apparatus 200 is set up at a position suitable for laser scanning, but the position and attitude in the absolute coordinate system thereof are not known. In this example, the laser scanning apparatus 200 performs first laser scanning over a wide range (e.g., 360-degree circumferential scanning) and performs second laser scanning mainly on the reflective prisms 300 and 400.

The first laser scanning provides point cloud data over a wide range, but in this stage, a position in the absolute coordinate system of each point is not known. This is because the position and attitude in the absolute coordinate system of the laser scanning apparatus 200 are not yet known.

For this reason, the second laser scanning is performed to position the reflection prisms 300 and 400, which are set up at the points at which the positions in the absolute coordinate system are already known, and the position and attitude in the absolute coordinate system of the laser scanning apparatus 200 are calculated by a method of resection.

After the position and attitude in the absolute coordinate system of the laser scanning apparatus 200 are determined, coordinates in the absolute coordinate system are provided to the point cloud data that is obtained in the first laser scanning, whereby point cloud data in the absolute coordinate system is obtained. The number of the reflection prisms may be three or more.

In the first laser scanning, reflected light that is light reflected back from each of the reflection prisms 300 and 400 is too intense and thereby saturates a light reception unit 202 of the laser scanning apparatus 200, causing a reduction in accuracy in measuring distances of the reflection prisms 300 and 400. In short, the accuracy of positioning the reflection prisms 300 and 400 is decreased in the first laser scanning.

In view of this, the second laser scanning is performed so as to accurately position the reflection prisms 300 and 400. In this laser scanning, in order to obtain high positioning accuracy, the level of input of distance measuring light to a light receiving element is reduced by using a variable optical attenuator. The variable optical attenuator is controlled based on a result of the first laser scanning.

Saturation of the light reception unit 202 due to input of intense light occurs mainly in the light receiving element. When the degree of saturation is low, acceptable distance measurement accuracy is ensured, although output of the light receiving element is distorted and reaches a limit. When the degree of saturation is high, waveform of output of the light receiving element is conspicuously distorted, and error occurs in measurement of distance using a phase difference of waveforms, resulting in a reduction in distance measurement accuracy.

The second laser scanning is performed in consideration of the latter case, under the conditions that do not adversely affect distance measurement accuracy (under the conditions that ensure desired distance measurement accuracy). Thus, saturation of the light reception unit 202 at a level that does not adversely affect distance measurement accuracy, is allowed in the second laser scanning.

### General Configuration

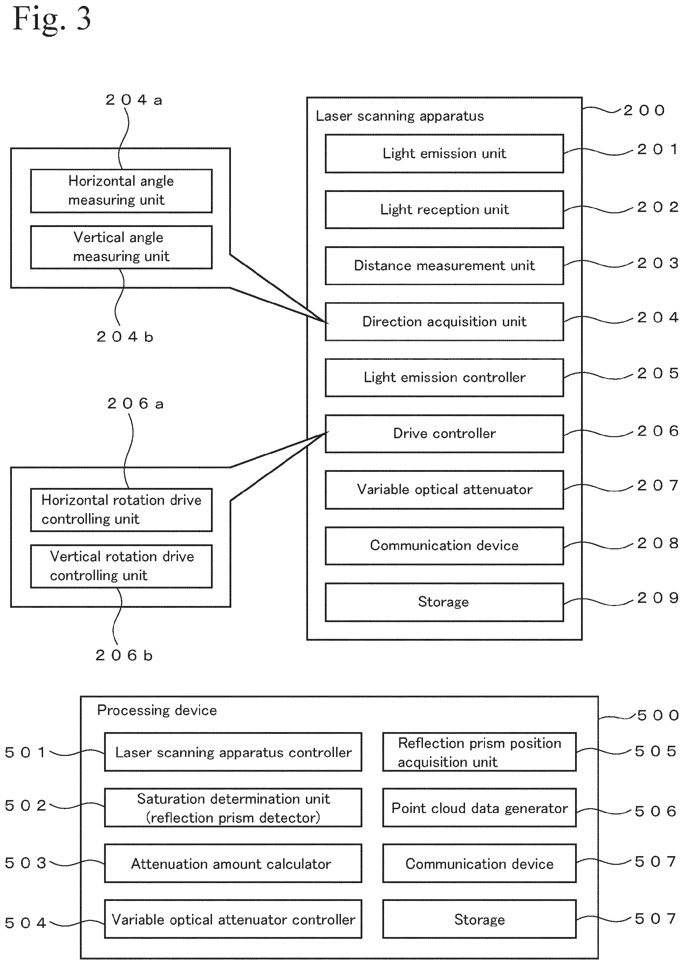

Fig. 3 shows a laser scanning apparatus 200 having a light reception unit 202 and a processing device 500 for controlling laser scanning that is performed by the laser scanning apparatus 200. The processing device 500 includes a laser scanning apparatus controller 501 that makes the laser scanning apparatus 200 execute first laser scanning (normal scanning) and second laser scanning (adjusted-light scanning). The first laser scanning is performed under conditions in which distance measurement accuracy is reduced in the laser scanning apparatus 200 by light reflected back from the reflection prisms 300 and 400 (refer to Fig. 1). The second laser scanning is performed under conditions in which distance measurement accuracy is not reduced in the laser scanning apparatus 200 by light reflected back from the reflection prisms 300 and 400.

The processing device 500 also includes a saturation determination unit 502 and a variable optical attenuator controller 504. The saturation determination unit 502 determines the state of saturation in the light reception unit 202 with respect to laser-scanned point clouds obtained in the first laser scanning. The variable optical attenuator controller 504 is a light controller that adjusts the intensity of light to be received at the light reception unit 202 in the second laser scanning, based on a result of determination performed by the saturation determination unit 502.

The second laser scanning is performed for positioning the reflection prisms 300 and 400 with high accuracy, and it is executed so that positioning accuracy will not be reduced due to saturation of the light reception unit 202.

For this purpose, the intensity of incident light of scanning light (measurement light) that enters the light reception unit 202 in the second laser scanning is reduced so as to be lower than that in the first laser scanning. In view of this, the degree of reduction is determined.

In this embodiment, the degree of occurrence of saturation in the light reception unit 202 due to intense reflected light is determined from the shape of an output waveform of a light receiving element in the light reception unit 202, with respect to laser-scanned point clouds obtained in the first laser scanning.

Reflected light from the reflection prisms 300 and 400 is significantly high in intensity among reflected light related to laser scanning. Thus, an output waveform of the light receiving element has a unique shape. On the basis of this unique waveform, the degree of reduction in intensity of light to be received at the light reception unit 202 under conditions for the first laser scanning is estimated, and a variable optical attenuator 207 is controlled based on the estimation result, in the second laser scanning.

Specifically, as the intensity of incident light is higher, the degree of saturation of the light receiving element is greater, and the length on the time axis of a maximum value part of an output waveform of the light receiving element is longer on the time axis. From this point of view, the degree of saturation is evaluated from the length on the time axis of the maximum value part of an output waveform of the light receiving element, and the variable optical attenuator 207 is controlled based on the evaluation result so that the maximum value of incident light that enters the light reception unit 202 will not cause reduction in positioning accuracy in the second laser scanning.

In more detail, preliminary data is obtained beforehand in relation to how much the length on the time axis of the maximum value part of an output waveform of the light receiving element in a saturated state should be shortened in order to ensure distance measurement accuracy. The variable optical attenuator 207 is adjusted in attenuation amount based on this preliminary data and an actually measured output waveform, and then the second laser scanning is performed. In the second laser scanning, reflected light from the reflection prisms 300 and 400 does not cause saturation of the light reception unit 202, which can reduce distance measurement accuracy. Thus, high distance measurement accuracy is obtained.

### Structure of Hardware

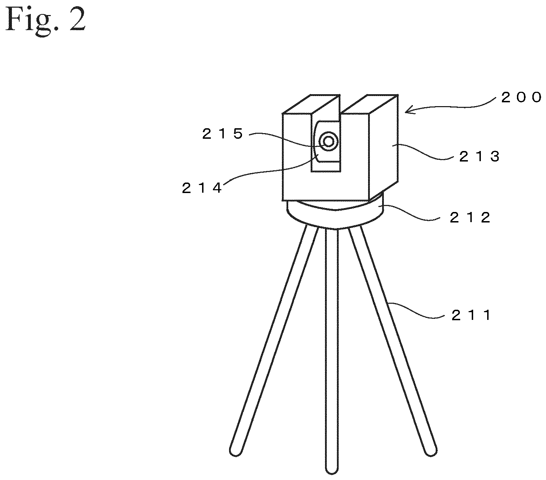

Fig. 2 shows an external appearance of the laser scanning apparatus (laser scanner) 200. The laser scanning apparatus 200 includes a tripod 211, a base 212 that is fixed on top of the tripod 211, a horizontal rotation unit 213 that is a rotary body being horizontally rotatable on the base 212, and a vertical rotation unit 214 that is a rotary body being vertically rotatable relative to the horizontal rotation unit 213. The laser scanning apparatus 200 is controlled by an external controller or control terminal which is wirelessly connected (not shown).

The vertical rotation unit 214 includes an optical unit 215 that emits and receives laser scanning light. The optical unit 215 emits pulses of laser scanning light. The emission of pulses of laser scanning light is performed along a direction (vertical plane) orthogonal to a rotation axis (axis extending in the horizontal direction) of the vertical rotation unit 214 while the vertical rotation unit 214 rotates. That is, the optical unit 215 emits pulses of laser scanning light along a vertical angle direction (direction of an elevation angle and a depression angle).

Laser scanning is performed on the surrounding area as follows. Pulses of laser scanning light are emitted from the optical unit 215 while the horizontal rotation unit 213 is rotated horizontally and the vertical rotation unit 214 is rotated vertically, and the laser scanning light that is reflected back from a target object is received by the optical unit 215.

The horizontal rotation unit 213 is rotated horizontally while scanning along the vertical angle direction (upper-lower scanning) is performed, whereby a scanning line along the vertical angle direction (upper-lower scanning line) moves in such a manner as to slide along a horizontal angle (horizontal) direction. Performing the horizontal rotation at the same time as the vertical rotation causes the scanning line along the vertical angle direction (upper-lower scanning line) to not be perfectly along the vertical direction and to be slightly slanted. Under the condition in which the horizontal rotation unit 213 is not rotated, scanning along the vertical angle direction (upper-lower scanning) is performed along the vertical direction.

Rotation of each of the horizontal rotation unit 213 and the vertical rotation unit 214 is performed by a motor. Each of a horizontal rotation angle of the horizontal rotation unit 213 and a vertical rotation angle of the vertical rotation unit 214 is accurately measured by an encoder.

Each beam of laser scanning light is one pulse of distance measuring light. One pulse of the laser scanning light is emitted to a scanning target point that reflects it, and a distance of this point is thereby measured. On the basis of this measured distance value and the direction of emission of the laser scanning light, the position of the scanned point (point that reflects the laser scanning light) is calculated relative to the laser scanning apparatus 200.

In one case, the laser scanning apparatus 200 outputs a laser-scanned point cloud by providing data of a distance and a direction related to each point (each scanned point). In another case, the laser scanning apparatus 200 internally calculates a position of each point in a certain coordinate system, and a three-dimensional coordinate position of each point is output as point cloud data. Data of the laser-scanned point cloud also contains information of luminance of each scanned point (intensity of light that is reflected back from each scanned point).

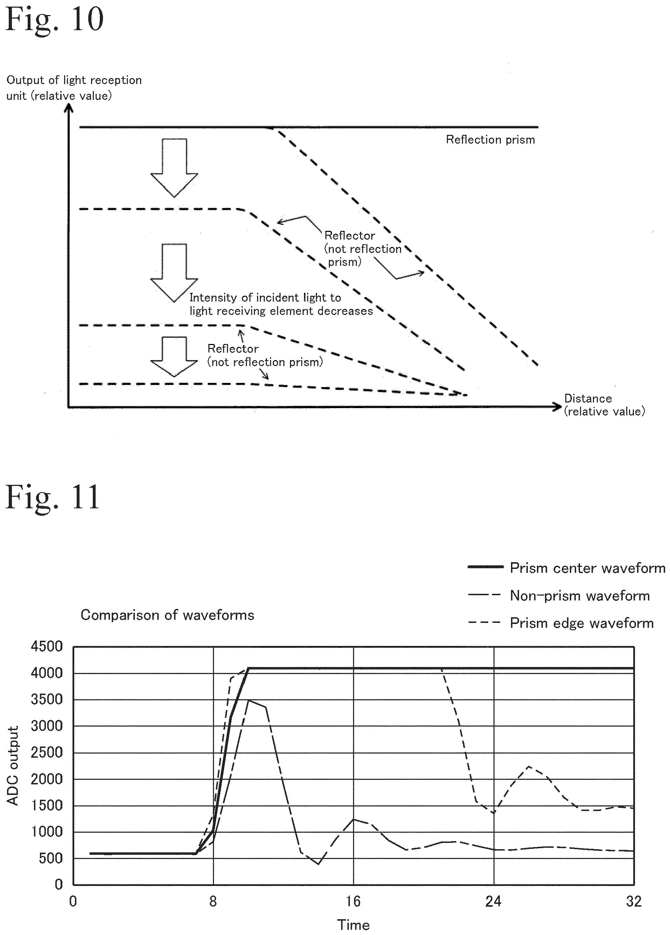

In this example, data of laser-scanned point clouds and data output from the light reception unit 202 related to each point are associated with each other and are stored in a storage 209. Although details will be described later, data output from the light reception unit 202 contains data of output waveforms of a light receiving element, as illustrated in Fig. 11.

Fig. 3 shows block diagrams of the laser scanning apparatus 200 and the processing device 500. The laser scanning apparatus 200 includes a light emission unit 201, a light reception unit 202, a distance measurement unit 203, a direction acquisition unit 204, a light emission controller 205, a drive controller 206, a variable optical attenuator 207, a communication device 208, and a storage 209.

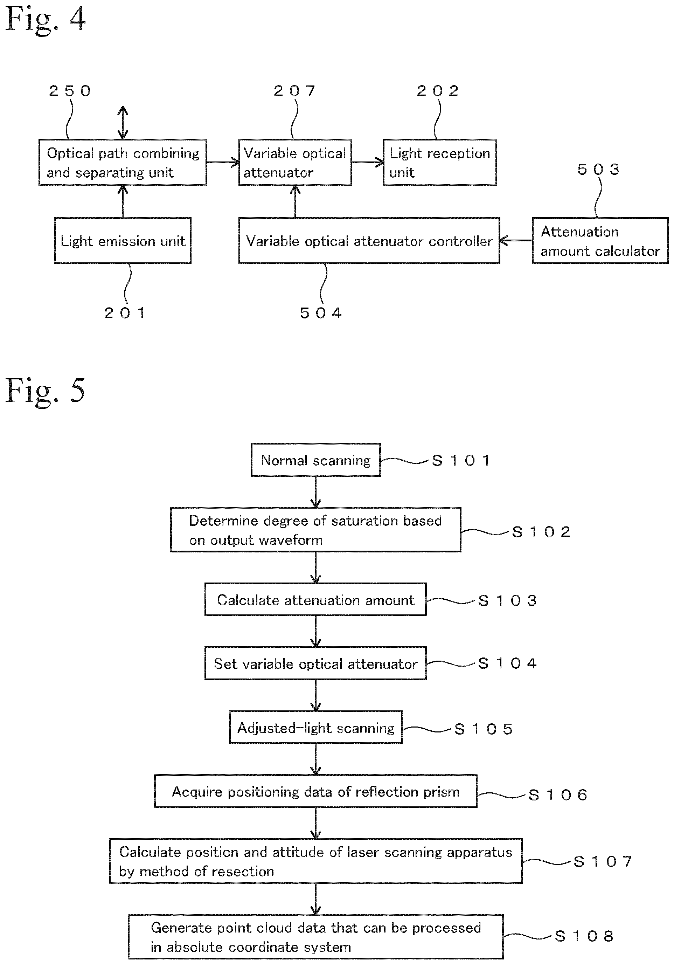

Fig. 4 is a block diagram of an optical system of the laser scanning apparatus 200. The light emission unit 201 includes a light emitting element that emits laser scanning light and also includes an optical system and peripheral circuits related to emission of light. The laser scanning light that is emitted from the light emission unit 201 is output to the outside from the optical unit 215 in Fig. 2 via an optical path combining and separating unit 250. The optical path combining and separating unit 250 is an optical system that combines and separates optical paths of emitted light and incident light by using a half mirror and a dichroic mirror.

The light reception unit 202 includes a light receiving element that receives laser scanning light and also includes an optical system and peripheral circuits related to reception of light. A photo-detector using a photoelectric effect or a photovoltaic effect is employed as the light receiving element. For example, a photodiode, a phototransistor, or a photocell can be used as the light receiving element.

The laser scanning light that is reflected back is received by the optical unit 215 and is led from the optical path combining and separating unit 250 to the variable optical attenuator 207, and it is then led to the light reception unit 202. The variable optical attenuator 207 adjusts the intensity of light that enters the light reception unit 202, under control of the variable optical attenuator controller 504.

Returning to Fig. 3, the distance measurement unit 203 calculates a distance from the laser scanning apparatus 200 to a reflection point that reflects laser scanning light (scanned point), based on output of the light reception unit 202. In this example, a reference optical path is provided inside the laser scanning apparatus 200. Laser scanning light is output from the light emitting element and is split into two beams. One beam is emitted from the optical unit 215 to a target object, as laser scanning light, whereas the other beam is led to the reference optical path as reference light.

This laser scanning light is reflected back from the target object and is received at the optical unit 215, whereas the reference light propagates in the reference optical path. Then, these two beams are combined together and then enter the light reception unit 202. Propagation distances of this laser scanning light and the reference light differ from each other, and therefore, the reference light is detected first by the light receiving element, and the laser scanning light is then detected by the light receiving element.

In terms of an output waveform of the light receiving element, a detection waveform of the reference light is output first, and a detection waveform of the laser scanning light is then output after a time interval. The distance to the point that reflects the laser scanning light is calculated from a phase difference (time difference) between the two waveforms. In another case, the distance can also be calculated from a time-of-flight of laser scanning light.

When the light receiving element is saturated by excessively intense incident light, a rise position and a position of a geometric center of the detected waveform vary on the time axis irrespective of the distance, which reduces accuracy in calculating the distance from a phase difference of the waveforms. This is a cause of reduction in distance measurement accuracy due to saturation of the light receiving element, which phenomenon is a problem to be solved by the present invention.

The direction acquisition unit 204 acquires a direction of the optical axis of laser scanning light. The direction of the optical axis is obtained by measuring an angle (horizontal angle) of the optical axis in the horizontal direction and an angle (elevation angle or depression angle) of the optical axis in the vertical direction. The direction acquisition unit 204 has a horizontal angle measuring unit 204a and a vertical angle measuring unit 204b.

The horizontal angle measuring unit 204a measures a horizontal rotation angle of the horizontal rotation unit 213. The horizontal rotation is rotation around the vertical direction. This angle is measured by an encoder. The vertical angle measuring unit 204b measures a vertical rotation angle (elevation angle or depression angle) of the vertical rotation unit 214. The vertical rotation is rotation around the horizontal direction. This angle is measured by an encoder.

Measuring a horizontal rotation angle of the horizontal rotation unit 213 and a vertical rotation angle of the vertical rotation unit 214 provides a direction of the optical axis of laser scanning light, that is, a direction of a laser-scanned point, as seen from the laser scanning apparatus 200.

The light emission controller 205 controls timing of emission of laser scanning light of the light emission unit 201. The drive controller 206 includes a horizontal rotation drive controlling unit 206a for controlling driving to make the horizontal rotation unit 213 rotate horizontally and a vertical rotation drive controlling unit 206b for controlling driving to make the vertical rotation unit 214 rotate vertically.

The variable optical attenuator 207 is disposed in front of the light reception unit 202 and attenuates light that enters the light reception unit 202. The attenuation amount (attenuation factor) is variable. The attenuation amount is varied based on an output waveform of the light receiving element, which is disposed at the light reception unit 202. Details of this process will be described later.

The variable optical attenuator 207 may be a type that can be adjusted in transmittance by rotating a semi-transmissive disc in which the transmittance gradually varies in the circumferential direction or may be a type in which transmittance of liquid crystals is controlled. Among commercially available modules of variable optical attenuators, an appropriate module can be selected and be used.

Light that is reflected back from a reflection prism is intense and thereby saturates the light receiving element, causing error in distance measurement value. For example, experiments conducted by the inventors of the present invention show that a laser scanner with an error of several millimeters in distance measurement can generate an error on the order of centimeters with respect to light reflected back from a reflection prism. Although this error does not increase at a constant rate partly due to nonlinear operation of a light receiving element, it is approximately several times to ten times the ordinary measurement error.

The variable optical attenuator 207, which is disposed in front of the light reception unit 202, reduces the intensity of light that enters the light reception unit 202 and prevents occurrence of the above-described problems.

The communication device 208 communicates with the processing device 500, and an external controller and other devices (not shown). The communication is performed by wired communication or by using a wireless local area network (WLAN), a mobile phone network, or the like. The storage 209 is composed of a semiconductor memory or a hard disk drive and stores an operation program and data that are necessary to operate the laser scanning apparatus 200 and data that are obtained during processing and as a result of operation.

The processing device 500 controls operation of the laser scanning apparatus 200 and processes point cloud data (data of laser-scanned point clouds) that is obtained by the laser scanning apparatus 200. One, some, or all of the functional units of the processing device 500 may be incorporated into the laser scanning apparatus 200. In addition, one, some, or all of the functions of the processing device 500 may be implemented by a data processing server.

The processing device 500 is composed of a personal computer (PC). One, some, or all of the functional units of the processing device 500 may be composed of dedicated hardware.

The processing device 500 includes a laser scanning apparatus controller 501, a saturation determination unit (reflection prism detector) 502, an attenuation amount calculator 503, a variable optical attenuator controller 504, a reflection prism position acquisition unit 505, a point cloud data generator 506, a communication device 507, and a storage 508.

The laser scanning apparatus controller 501 generates a control signal for controlling operation of the laser scanning apparatus 200. This control signal is transmitted from the communication device 506 to the laser scanning apparatus 200. This control signal includes a control signal for controlling laser scanning and a control signal for controlling the variable optical attenuator 207. The laser scanning apparatus controller 501 performs control related to operations of the first laser scanning (normal scanning) and the second laser scanning (adjusted-light scanning).

The saturation determination unit (reflection prism detector) 502 determines the degree of saturation of the light receiving element of the light reception unit 202. As described below, the variable optical attenuator controller 504 controls the variable optical attenuator 207 based on this determination.

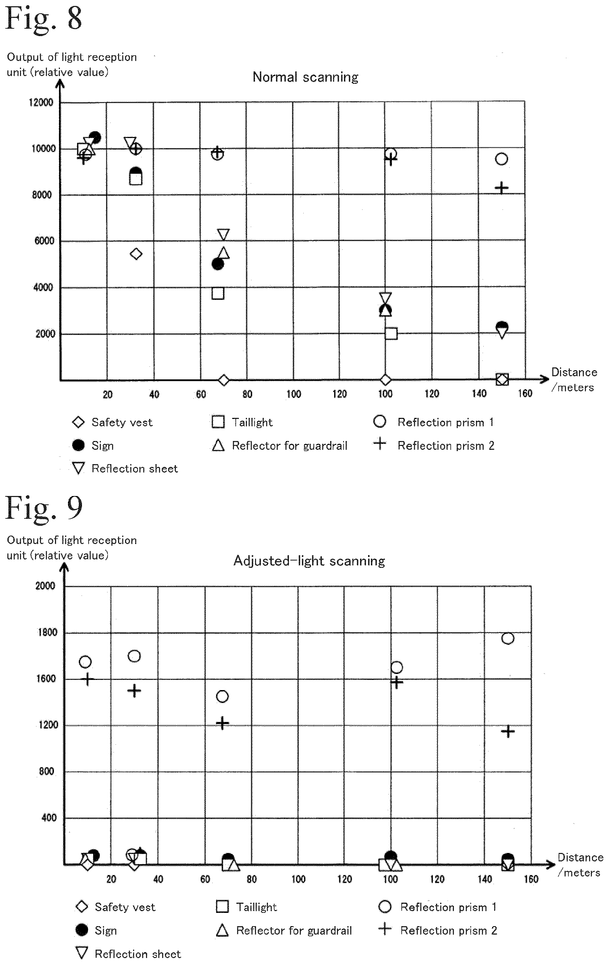

The following describes details of processing performed by the saturation determination unit 502. Fig. 8 is a graph showing actually measured values of a detection intensity of light reflected back from each type of reflector (vertical axis) and of a distance (meters) from the laser scanner to the reflective object, in the normal scanning. Herein, the detection intensity shown on the vertical axis is a relative value output from the light reception unit 202. In addition, output of the light reception unit 202 represents output from the light receiving element.

Among the reflective objects shown in Fig. 8, a safety vest is a vest having a sheet reflection material. A sign, a taillight, and a reflector for a guardrail have a reflector made of a light reflective material for the purpose of increasing visibility. These reflectors have a high reflectance in a visible light band, compared with commonly scanned targets (e.g., landforms). Thus, the intensity of light that is reflected back from a commonly scanned target is much lower than the levels shown in Fig. 8. Reflection prisms 1 and 2 are commercially available reflection prisms for surveying having different model numbers.

Fig. 8 shows that, in the state in which the distances from the laser scanner are long by a certain degree (in the case in Fig. 8, 60 meters or longer), output of the light reception unit 202 that received light reflected back from each of the reflection prisms differs from output of the light reception unit 202 that received light reflected back from each of the reflectors, which are not reflection prisms.

Fig. 9 shows results obtained under conditions for the adjusted-light scanning, which correspond to the data in Fig. 8. In the adjusted-light scanning in this case, the intensity of scanning light entering the light receiving element is greatly reduced, compared with the normal scanning in Fig. 8. It is noted that the degrees of reduction are not uniform because the attenuation amount of the attenuator was varied in accordance with the distance.

Fig. 9 shows that output of the light reception unit 202 greatly differs (by several times) between light reflected back from each of the reflection prisms and light reflected back from each of the reflectors other than the reflection prisms, in the adjusted-light scanning. The reason for this is as follows.

In the case in Fig. 9, the level of detecting light that was reflected back from each of the reflectors, which are not reflection prisms, was not greater than 50 in terms of the relative value on the vertical axis. On the other hand, the level of detecting light that was reflected back from each of the reflection prisms was not less than 1000. In short, the output level of the light reception unit 202 for light reflected back from each of the reflectors, which are not reflection prisms, is 1/20th or less of that for light that is reflected back from each of the reflection prisms.

This phenomenon occurs due to the following causes. Basically, in detecting light that is reflected back from the reflection prism in the normal scanning, the light receiving element is saturated, and linearity between input (incident light) and output of the light receiving element is notably reduced.

This causes a decrease in accuracy of distance measurement and also causes output of the light receiving element to not correctly agree with the intensity of detected light. In more detail, the output is not increased in spite of an increase in input and is lower than that which should have been originally output.

As a result, the detection value of light reflected back from each of the reflection prisms in Fig. 8 is less than the true value. In other words, the output of the light receiving element is saturated around the relative value 10000 on the vertical axis, and therefore, a greater value is not output when input is further increased.

The detected value of light that was reflected back from each of the reflection prisms and the detected value of light that was reflected back from each of the reflectors were close to each other in a range in which the distance was 40 meters or less in Fig. 8. However, in consideration of light that is received after being reflected back being more intense as the distance is shorter, the degree of saturation of the light receiving element for short distances has a relationship "(light reflected back from a reflection prism) >> (light reflected back from a reflector)."

Thus, in the adjusted-light scanning in Fig. 9, the level of detecting light that was reflected back from each of the reflection prisms (output level of the light receiving element) is not linearly reduced. From another point of view, the output is not greatly decreased proportionally to a decrease in input in a state in which the degree of saturation of the light receiving element is high. That is, in relation to light that is reflected back from the reflection prism, the output of the light receiving element is not greatly reduced, although the scanning is changed from normal scanning to adjusted-light scanning. This can be understood as a phenomenon in which the output is not greatly reduced despite a decrease in input because the level of detecting light that is reflected back from the reflection prism is saturated and is still at maximum, although the scanning is changed from normal scanning to adjusted-light scanning.

On the other hand, the degree of saturation of the light receiving element that receives light that is reflected back from the reflector is low or the light receiving element is not saturated, and therefore, the level of the output is decreased in accordance with decrease in input (intensity of incident light). Thus, in relation to light that is reflected back from the reflectors that are not reflection prisms, the output of the light receiving element is reduced in accordance with input when the scanning is changed from normal scanning to adjusted-light scanning.

From these points of view, when the scanning is changed from normal scanning (Fig. 8) to adjusted-light scanning (Fig. 9), the level of detecting light that is reflected back from each of the reflectors, which are not reflection prism, is notably reduced compared with the reduction in the level of detecting light that is reflected back from each of the reflection prisms. As a result, the level of detecting light that is reflected back from each of the reflectors, which are not reflection prisms, is 1/20th or less of that for light that is reflected back from each of the reflection prisms, in the adjusted-light scanning.

Figs. 8 and 9 differ from each other in the intensity of light entering the light reception unit 202. Herein, it is assumed that the intensity of light entering the light reception unit 202 in the state in Fig. 8 is gradually reduced. In this case, as the intensity of light entering the light reception unit 202 is gradually reduced in the state in Fig. 8, the state shown in Fig. 9 can be finally obtained.

A conceptual drawing showing this state is shown in Fig. 10. As shown in Fig. 10, as the intensity of light entering the light reception unit 202 is reduced, the detection intensity (output value from the light reception unit 202) of light reflected back from a reflection prism does not decrease, whereas the detection intensity of light reflected back from a reflector, which is not a reflection prism, decreases proportionally to the intensity of light entering the light reception unit 202. As a result, when the level of light entering the light receiving element is reduced by a certain degree, the output level of the light receiving element has the relationship "reflection prism >> reflector that is not a reflection prism."

Fig. 11 shows output waveforms of the light receiving element of the light reception unit 202 in normal scanning. Herein, an output of the light receiving element is read by an analog-to-digital (A/D) converter, and an output from the A/D converter is shown on the vertical axis in Fig. 11. The horizontal axis in Fig. 11 represents output timing of the A/D converter, which is time of output. The horizontal axis in Fig. 11 can be understood as a time axis.

Fig. 11 shows a prism center waveform that is a detected waveform of scanning light reflected back from a reflection prism after entering the center of the reflection prism. The non-prism waveform is a detected waveform of light reflected back from a reflection sheet that can be used for ensuring safety. The prism edge waveform is a detected waveform of scanning light that is reflected back from a reflection prism after it is oriented and emitted to an edge part of the reflection prism. Other conditions are the same for these waveforms.

The prism center waveform and the prism edge waveform are flattened at the tops, which are typical output waveforms in a saturated state. In addition, the peaks are flattened, showing that output of the light receiving element reaches the upper limit and does not become greater. The length on the time axis of the maximum value part, which is the flattened part, of each of the prism center waveform and the prism edge waveform is long due to saturation of the light receiving element. For example, in a case of emitting light that has an intensity exceeding an allowable input, to a photodiode, even after emission of the light is stopped, the photodiode is still continuously in an ON state, instead of recovering to an OFF state. The prism center waveform in particular clearly shows this phenomenon.

The prism edge waveform shows a tendency for the photodiode to recover to the OFF state. The reason of this is as follows. In the case in which scanning light is oriented to the edge of the reflection prism, some components of the scanning light do not enter the reflection prism, and a light reflectivity of the reflection prism is lower than that of the center of the reflection prism. Thus, the intensity of light entering the light receiving element is reduced, and a tendency to be saturated is relatively low.

The prism center waveform and the prism edge waveform in Fig. 11 do not have shapes of an ordinary waveform, and therefore, distance measurement accuracy using a phase difference is reduced. In addition, in a saturated state, the position of a rise of the waveform is unstable on the time axis, that is, reproducibility under the same conditions is low, which also reduces distance measurement accuracy.

The non-prism waveform shows a single peak corresponding to a pulse waveform of incident light and also reflects a damped vibration waveform that appears when the light receiving element responds to an input pulse. Moreover, the top of the non-prism waveform does not have a shape of a waveform showing saturation of the light receiving element, unlike the prism center waveform and the prism edge waveform.

For these reasons, it can be concluded that the non-prism waveform in Fig. 11 shows a non-saturated state of the light receiving element, or if saturation occurs, the influence of the saturated state of the light receiving element is small. In other words, the non-prism waveform in Fig. 11 can be recognized as an output waveform of the light receiving element in the condition of not causing reduction in distance measurement accuracy.

As in the case shown in Fig. 11, observing waveforms of the light receiving element makes it possible to distinguish between reflection from a reflection prism and reflection from a reflector that is not a reflection prism, although the reflection prism and the reflector have high reflectance in the same visible light band. In addition, the degree of saturation can also be determined.

In the adjusted-light scanning, the intensity of light that is reflected back from the reflection prism is reduced to a degree that does not degrade distance measurement accuracy. In other words, in the adjusted-light scanning, the intensity of light entering the light receiving element is reduced to a degree that does not cause reduction in distance measurement accuracy.

In consideration of this, light that is reflected back from the center of the reflection prism is attenuated in intensity before entering the light receiving element of the light reception unit, so that a prism center waveform will have a shape with a single peak, as in the case of the non-prism waveform in Fig. 11. This results in obtaining high distance measurement accuracy for the reflection prism.

Specifically, an attenuation amount (attenuating amount) of the variable optical attenuator 207 necessary to make a prism center waveform have a shape with a single peak as in the case of a non-prism waveform is obtained by prior experimentation. The experiments are performed with respect to various prism center waveforms, whereby a data table is created.

In more detail, a relationship between a duration (length on the horizontal axis) of the maximum value part of an output waveform of the light receiving element and an attenuation amount necessary to obtain a non-prism waveform as shown in Fig. 11, is obtained in advance as reference data. This data is stored in the storage 508. An example of this data is shown in the following Table 1.

**[Table 1]**

| | | | | | | | |
|---|---|---|---|---|---|---|---|
| Length of Wwaveform | L1 | L2 | L3 | L4 | L5 | ... | Ln |
| Attenuation Amount | A1 | A2 | A3 | A4 | A5 | ... | An |

This data relates to a length on the time axis of the maximum value part of an output waveform of the light receiving element and an adjustment content of the variable optical attenuator controller 504 (attenuation amount in the variable optical attenuator 207). This data can also be understood as data using an attenuation amount of the variable optical attenuator 207 as a parameter, showing a relationship between a state in which distance measurement accuracy is not reduced, and the length on the time axis of the maximum value part of an output waveform in a state in which saturation occurs.

Typically, for an output waveform having a relatively long length on the time axis at the maximum value part, the intensity of light to be received by the light reception unit 202 is adjusted so as to be relatively greatly attenuated.

The duration of the waveform is, for example, a time during which an output value of 90 % or greater relative to a peak continues. The parameter to be evaluated is not limited to the duration of the maximum value part of the waveform, and the area of the waveform may be used.

The saturation determination unit 502 searches for a point in which the length on the time axis of the maximum value part of an output waveform of the light receiving element is the longest, among laser-scanned point clouds obtained in the first laser scanning. As shown in Fig. 11, reflection from a reflection prism and reflection from a reflector that is not a reflection prism can be clearly distinguished from each other based on output waveforms of the light receiving element. Thus, on the basis of the result of the saturation determination, it is possible to identify and detect light that is reflected back from a reflection prism, among laser scanning data obtained in the normal scanning. From this point of view, the saturation determination unit 502 also functions as a reflection prism detector.

In this manner, the reflection prism and the reflector that is not a reflection prism are distinguished from each other in the first laser scanning (normal scanning).

The attenuation amount calculator 503 calculates an attenuation amount of the variable optical attenuator 207 by referring to the reference data (e.g., Table 1), which is obtained in advance, with respect to the length on the time axis of the maximum value part related to the point that is searched for by the saturation determination unit 502. The point reflects light in which the length on the time axis of the maximum value part of the output waveform from the light receiving element is the longest. The data of this attenuation amount is transmitted to the variable optical attenuator controller 504.

The variable optical attenuator controller 504 generates a control signal for adjusting an attenuation amount (degree of attenuating light) of the variable optical attenuator 207. The variable optical attenuator controller 504 adjusts the variable optical attenuator 207 so that the attenuation amount calculated in the attenuation amount calculator 503 is achieved. Under the adjusted conditions, the adjusted-light scanning is performed. This adjustment prevents saturation that adversely affects the light reception unit 202 in distance measurement.

The reflection prism position acquisition unit 505 acquires scanned points of the reflection prisms 300 and 400 among the laser-scanned point clouds obtained by the adjusted-light scanning. As described in relation to Fig. 9, in the state in which an input level to the light receiving element (light reception unit 202) is lowered to a level that prevents occurrence of saturation, or in the case of the adjusted-light scanning, the intensity of light that is reflected back from a reflector that is not a reflection prism is very low compared with that of the reflection prism. Thus, light that is reflected back from the reflection prism is easily identified by using a threshold, among the laser-scanned point clouds obtained in the adjusted-light scanning.

Multiple reflection points may be acquired with respect to one reflection prism, depending on a distance to the reflection prism, a scanning density, and a size of the reflection prism. In this case, the position of the reflection prism is obtained by calculating a position of the geometric center of one cloud of the reflection points.

A bright point that originates from the reflection prism may be determined based on the result of the normal scanning, and the adjusted-light scanning may be performed only on the reflection prism. Even in such a case, in order to eliminate noise caused by reflection from surroundings and a back side of the reflection prism, reflected light of a certain level or higher is detected as a bright point of the reflection prism by using a threshold.

A point that originates from the reflection prism may be detected among the laser-scanned point clouds obtained in the adjusted-light scanning, by using the number of the reflection prisms that are set up. In one example, two reflection prisms are set up. In this case, two bright point clouds having notably high luminance among the laser-scanned point clouds obtained in the adjusted-light scanning, are detected as bright points of light reflected back from the reflection prisms.

The point cloud data generator 506 calculates the position and attitude in the absolute coordinate system of the laser scanning apparatus 200, based on the positioning data of the reflection prisms 300 and 400 obtained in the second laser scanning (adjusted-light scanning). Then, the point cloud data generator 506 associates the point cloud data obtained in the first laser scanning (normal scanning), with the absolute coordinate system, based on the calculated position and attitude.

The communication device 507 communicates with the laser scanning apparatus 200 and other devices. The communication is performed by wired communication or by using a WLAN, a mobile phone network, or the like. The storage 509 is composed of a semiconductor memory or a hard disk drive and stores an operation program and data that are necessary to operate the processing device 500 and data that is obtained during processing and as a result of operation.

### Example of Processing

Fig. 5 shows an example of a processing procedure. The program for executing the processing in Fig. 5 is stored in the storage 508 of the processing device 500 and is read and executed by a central processing unit (CPU) of the computer that constitutes the processing device 500. It is also possible to store this program in an appropriate storage medium and to read this program therefrom for use.

Prior to the processing in Fig. 5, first, the laser scanning apparatus 200 and the reflection prisms 300 and 400 are set up at a site at which laser scanning is to be performed. At this stage, the position and attitude of the laser scanning apparatus 200 are still not known, and the reflection prisms 300 and 400 are set up at points at which positions in the absolute coordinate system are already known. The points at which positions in the absolute coordinate system are already known are positioned by a preparatory surveying operation, whereby the positions are determined. A local coordinate system can also be used as the coordinate system.

Under these conditions, normal scanning (first laser scanning) is performed (step S101). The normal scanning is performed in an area from which point clouds are to be obtained. This target area can be a 360-degree circumference or a limited area. The normal scanning is performed in order to obtain point clouds of a surveying target and is performed under ordinary conditions for obtaining laser-scanned point clouds.

The normal scanning provides data (point cloud data) of distance and direction to each point from the optical origin (origin of positioning) of the laser scanning apparatus 200. The point cloud data is stored in the storage 508 in such a manner that each point is associated with data of an output waveform from the light receiving element (refer to Fig. 11).

At this stage, the position and attitude in the absolute coordinate system of the laser scanning apparatus 200 are still not known, and therefore, the relationships between the point cloud data and the absolute coordinate system are not yet determined.

Next, the length on the time axis of the maximum value part of the output waveform from the light receiving element with respect to each point in the laser-scanned point clouds obtained in step S101 is considered, and a point having the maximum value of the length of the maximum value part is acquired (step S102). This point corresponds to light that is reflected back from the reflection prism. This process is performed by the saturation determination unit 502.

Next, an attenuation amount of the variable optical attenuator 207 is calculated based on the length on the time axis of the maximum value part of the output waveform of the point acquired in step S102 (step S103). This process is performed by the attenuation amount calculator 503. Moreover, the output waveforms from the light receiving element, which are specific to light reflected back from the reflection prisms 300 and 400, are considered, and the directions of the reflection prisms 300 and 400 as seen from the laser scanning apparatus 200 are obtained.

Thereafter, the variable optical attenuator 207 is set based on the attenuation amount obtained in step S103 (step S104), and the adjusted-light scanning is performed (step S105). The adjusted-light scanning is controlled by the laser scanning apparatus controller 501 (Fig. 3).

The adjusted-light scanning enables accurately positioning the reflection prisms 300 and 400. The adjusted-light scanning is performed in a limited area mainly including the reflection prisms 300 and 400. This is in order to reduce unnecessary scanning.

Then, a point (scanned point) originating from the reflection prism is detected among the laser-scanned point clouds obtained in the adjusted-light scanning, and data of the position that is positioned, of the point is acquired (step S106). This process is performed by the reflection prism position acquisition unit 505.

After the adjusted-light scanning is performed, and the positions in the absolute coordinate system of the reflection prisms 300 and 400 are acquired, the position and attitude in the absolute coordinate system of the laser scanning apparatus 200 are calculated by using a method of resection (step S107).

The following briefly describes the principle of the process performed in step S107. First, the positional relationships between the laser scanning apparatus 200 and each of the reflection prisms 300 and 400 are determined from the result of the adjusted-light scanning in step S105. This provides a shape of a triangle having apexes at the positions of the laser scanning apparatus 200 and the reflection prisms 300 and 400.

In this state, the positions in the absolute coordinate system of the reflection prisms 300 and 400 are already known. Thus, the positions in the absolute coordinate system of two apexes of the triangle can be determined. Then, the position in the absolute coordinate system of the laser scanning apparatus 200 at the other apex of the triangle can be determined.

In addition, the direction in the absolute coordinate system of each side of the triangle is also determined, whereby the attitude in the absolute coordinate system of the laser scanning apparatus 200 is also determined. In this manner, the position and attitude in the absolute coordinate system of the laser scanning apparatus 200 are calculated. This process is performed by the point cloud data generator 506. Alternatively, an exterior orientation parameter calculator may be additionally prepared, and the process in step S107 may be performed by this calculator.

After step S107, the point cloud data that is obtained in the normal scanning is associated with the absolute coordinate system (step S108). This process is performed by the point cloud data generator 506.

For example, data containing distance and direction of each point based on the origin of the laser scanning apparatus 200, coordinates in the absolute coordinate system of the origin, and the attitude in the absolute coordinate system of the laser scanning apparatus 200, in association with each other, is generated. This data is point cloud data that can be processed in the absolute coordinate system.

The point cloud data that is obtained in the normal scanning may be converted into point cloud data that is described in the absolute coordinate system. That is, after the position and attitude in the absolute coordinate system of the laser scanning apparatus 200 are determined, coordinates of the point cloud data that is obtained in the normal scanning can be converted into coordinates in the absolute coordinate system. Specifically, information related to parallel movement and rotation is required for coordinate conversion, and the information related to parallel movement is obtained from the position in the absolute coordinate system of the laser scanning apparatus 200, whereas the information related to rotation is obtained from the attitude in the absolute coordinate system of the laser scanning apparatus 200. On the basis of these pieces of information, the point cloud data that is obtained in the normal scanning is moved parallel and is rotated, whereby point cloud data described in the absolute coordinate system is obtained. This process may be performed in step S108.

### Advantageous Effects

Excessive input of light into the light reception unit 202 is prevented, resulting in solving the problems related to intense light that is reflected back from a reflection prism in laser scanning. Thus, the distance of the reflection prism can be measured with high accuracy. As a result, point cloud data that is finally obtained has high accuracy.

### 2. Second Embodiment

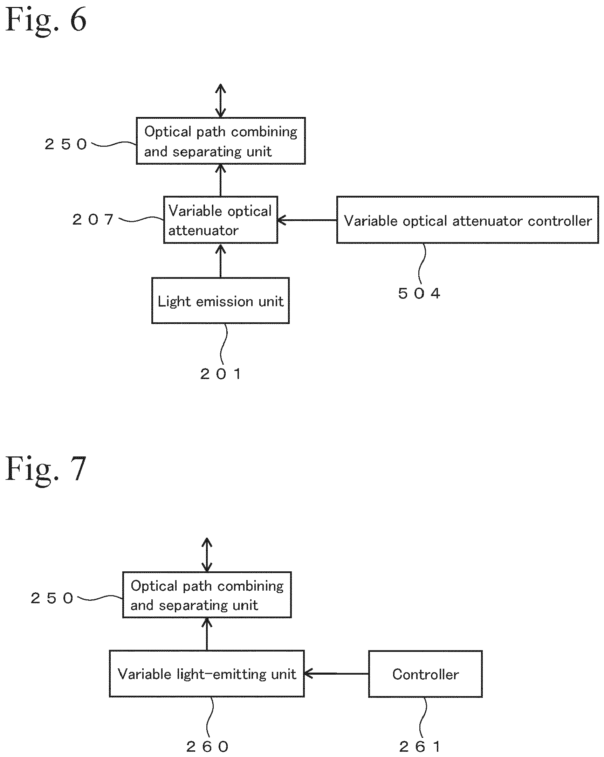

Fig. 6 shows an example of disposing the variable optical attenuator 207 in front of the light emission unit 201. In this case, measurement light that is emitted from the light emission unit 201 is attenuated by the variable optical attenuator 207 and is adjusted so that reflection intensity appropriate for positioning the reflection prism will be obtained.

### 3. Third Embodiment

Fig. 7 shows a case of using a variable light-emitting unit 260 that emits light with varied intensity. In this case, the intensity of light to be emitted by the variable light-emitting unit 260 is adjusted by a controller 261, so that a reflection intensity appropriate for positioning the reflection prism will be obtained.

### 4. Fourth Embodiment

The embodiments described in this specification can be used in combination.

## Claims

1. A laser scanning control device for controlling laser scanning that is performed by a laser scanning apparatus having a light reception unit, the laser scanning control device comprising a processor or circuitry configured to:
make the laser scanning apparatus execute first laser scanning and second laser scanning, the first laser scanning being performed under conditions in which distance measurement accuracy is reduced by light reflected back from a reflection prism, the second laser scanning being performed under conditions in which distance measurement accuracy is not reduced by light reflected back from the reflection prism;
determine a state of saturation of the light reception unit, with respect to a laser-scanned point cloud obtained in the first laser scanning; and
adjust an intensity of light to be received by the light reception unit in the second laser scanning, based on a result of determining the state of saturation.

2. The laser scanning control device according to claim 1, wherein the state of saturation is determined based on an output waveform that is output from the light reception unit.

3. The laser scanning control device according to claim 2, wherein the state of saturation is determined based on a length on a time axis of a maximum value part of the output waveform output from the light reception unit.

4. The laser scanning control device according to claim 3, wherein a relationship between the length on the time axis of the maximum value part of the output waveform and a degree of the adjustment is obtained in advance.

5. The laser scanning control device according to claim 3, wherein, in a case in which the length on the time axis of the maximum value part of the output waveform is relatively long, the intensity of light to be received by the light reception unit is relatively greatly attenuated.

6. The laser scanning control device according to claim 3, wherein a relationship between a state in which distance measurement accuracy is not reduced and the length on the time axis of the maximum value part of the output waveform is preliminarily known, and the intensity of light to be received by the light reception unit is adjusted in the second laser scanning, based on this relationship.

7. A laser scanning apparatus comprising:
a light reception unit; and
a processor or circuitry configured to:
execute first laser scanning and second laser scanning, the first laser scanning being performed under conditions in which distance measurement accuracy is reduced by light reflected back from a reflection prism, the second laser scanning being performed under conditions in which distance measurement accuracy is not reduced by light reflected back from the reflection prism;
determine a state of saturation of the light reception unit, with respect to a laser-scanned point cloud obtained in the first laser scanning; and
adjust an intensity of light to be received by the light reception unit in the second laser scanning, based on a result of determining the state of saturation.

8. A laser scanning control method for controlling laser scanning that is performed by a laser scanning apparatus having a light reception unit, the method comprising:
making the laser scanning apparatus execute first laser scanning and second laser scanning, the first laser scanning being performed under conditions in which distance measurement accuracy is reduced by light reflected back from a reflection prism, the second laser scanning being performed under conditions in which distance measurement accuracy is not reduced by light reflected back from the reflection prism;
determining a state of saturation of the light reception unit, with respect to a laser-scanned point cloud obtained in the first laser scanning; and
adjusting an intensity of light to be received by the light reception unit in the second laser scanning, based on a result of determining the state of saturation.

9. A non-transitory computer recording medium storing computer executable instructions for controlling laser scanning that is performed by a laser scanning apparatus having a light reception unit, the computer executable instructions being made to, when read and executed by a computer processor, cause the computer processor to:
make the laser scanning apparatus execute first laser scanning and second laser scanning, the first laser scanning being performed under conditions in which distance measurement accuracy is reduced by light reflected back from a reflection prism, the second laser scanning being performed under conditions in which distance measurement accuracy is not reduced by light reflected back from the reflection prism;
determine a state of saturation of the light reception unit, with respect to a laser-scanned point cloud obtained in the first laser scanning; and
adjust an intensity of light to be received by the light reception unit in the second laser scanning, based on a result of determining the state of saturation.
